(19) Europäisches Patentamt
European Patent Office
Office européen des brevets

(11) **EP 1 144 106 B1**

## (12) EUROPÄISCHE PATENTSCHRIFT

(45) Veröffentlichungstag und Bekanntmachung des Hinweises auf die Patenterteilung:
**23.07.2003 Patentblatt 2003/30**

(21) Anmeldenummer: **99963564.2**

(22) Anmeldetag: **16.12.1999**

(51) Int Cl.$^7$: **B01J 19/00**

(86) Internationale Anmeldenummer:
**PCT/EP99/10022**

(87) Internationale Veröffentlichungsnummer:
**WO 00/040330 (13.07.2000 Gazette 2000/28)**

(54) **VORRICHTUNG ZUR DURCHFÜHRUNG VON CHEMISCHEN REAKTIONEN**

DEVICE FOR CARRYING OUT CHEMICAL REACTIONS

DISPOSITIF POUR EFFECTUER DES REACTIONS CHIMIQUES

(84) Benannte Vertragsstaaten:
**DE FR NL**

(30) Priorität: **30.12.1998 DE 19860821**

(43) Veröffentlichungstag der Anmeldung:
**17.10.2001 Patentblatt 2001/42**

(73) Patentinhaber: **MWG -Biotech AG**
**85560 Ebersberg (DE)**

(72) Erfinder:
• **HEIMBERG, Wolfgang**
**D-85560 Ebersberg (DE)**
• **WEICHSELGARTNER, Michael**
**D-85560 Ebersberg (DE)**

(74) Vertreter: **Ganahl, Bernhard**
**Reinhardt-Söllner-Ganahl,**
**P.O. Box 12 26**
**85542 Kirchheim b. München (DE)**

(56) Entgegenhaltungen:
EP-A- 0 164 206    EP-A- 0 181 491
WO-A-98/57181    WO-A-99/65602
US-A- 3 306 006    US-A- 5 538 694
US-A- 5 837 858

• PATENT ABSTRACTS OF JAPAN vol. 012, no. 198 (C-502), 8. Juni 1988 (1988-06-08) & JP 62 298599 A (SHIMADZU CORP), 25. Dezember 1987 (1987-12-25)
• PATENT ABSTRACTS OF JAPAN vol. 012, no. 191 (C-501), 3. Juni 1988 (1988-06-03) & JP 62 294693 A (SHIMADZU CORP), 22. Dezember 1987 (1987-12-22)
• BAIER J ET AL: "SYNTHESIS AND PURIFICATION IN A SINGLE COLUMN ON A HIGH-THROUGHPUT AUTOMATED OLIGONUCLEOTIDE PRODUCTION SYSTEM" BIOTECHNIQUES,US,EATON PUBLISHING, NATICK, Bd. 20, 1996, Seiten 298-303, XP000857679 ISSN: 0736-6205

**Beschreibung**

Die Erfindung betrifft eine Vorrichtung zur Durchführung von chemischen Reaktionen. Insbesondere betrifft die Erfindung eine Vorrichtung zur Durchführung von chemischen Synthesen, vorzugsweise zum Synthetisieren von Oligonukleotiden.

Derartige Vorrichtungen sind bspw. aus der EP 0 164 206 B1 und der EP 0 181 491 B1 bekannt. Diese Vorrichtungen weisen jeweils mehrere stapelförmig übereinander angeordnete Reaktionsscheiben auf, in welchen jeweils drei oder vier als Kanäle dienende, durchgehende dünne Bohrungen und eine als Reaktionsgefäß dienende Bohrung mit zumindest bereichsweise größerem Querschnitt angeordnet sind. Die Reaktionsscheiben weisen eine mittige Bohrung auf, durch die sich ein als Verbindungselement dienender Bolzen erstreckt. An den Enden ist der Bolzen jeweils mit einem Gewinde versehen, auf welche je eine Mutter geschraubt ist, um die Reaktionsscheiben mit beträchtlicher Kraft zusammenzuhalten.

Die Reaktionsscheiben können um den Bolzen gedreht werden, wobei hierzu die Schraubverbindung zu lösen ist. Durch das Drehen der Reaktionsscheiben um den Bolzen werden die Kanäle in eine fluchtende Anordnung zu einer der Reaktionskammern gebracht, um eine bestimmte Reagenz dem Reaktionsgefäß zuzuführen.

Aus der JP 62 298599 A geht eine Vorrichtung hervor, die ähnlich zu der Vorrichtungen gemäß der EP 0 164 206 B1 ausgebildet ist, wobei in jeder Scheibe lediglich ein einziges Reaktionsgefäß vorgesehen ist.

Diese Vorrichtungen haben sich in der Praxis nicht bewährt, da die Anzahl der gleichzeitig ausführbaren Reaktionen begrenzt und bei jeder Änderung der einer bestimmten Reaktionskammer zuzuführenden Kombinationen von Reagenzien muß die Schraubverbindung gelöst werden und die Reaktionsscheiben müssen von Hand neu angeordnet werden.

In der DE 38 13 671 A1 ist eine Vorrichtung zur Durchführung chemischer Reaktionsfolgen beschrieben, die einen Stapel übereinander angeordneter und wahlweise gegeneinander schrittweise verschiebbarer Reaktionsplatten aufweist, die mit im Schrittabstand angeordneten Durchgängen versehen sind, von denen jeweils einer als Reaktionskammer ausgebildet ist. Eine Plattenverstelleinrichtung dient der wahlweisen Verschiebung der jeweiligen Platte relativ zum übrigen Plattenstapel. Es ist ein Hebelmechanismus vorgesehen, um die Platten nach einer Verschiebung zu beaufschlagen, damit eine einwandfreie Dichtung der in den Platten ausgebildeten Kanäle sichergestellt ist.

Aus der EP 629 144 B1 geht eine Vorrichtung zur Durchführung zeitgleich oder sequentiell ablaufender chemischer Reaktionen hervor, bei der in einer Vielzahl von Reaktionskammern gleichzeitig chemische Reaktionen ablaufen können, wie z.B. die Synthese von Oligonukleotiden. Hierzu werden anstelle von Scheiben Stäbe vorgesehen, die übereinanderliegend angeordnet und gegenseitig automatisch verschiebbar sind. In einem einzigen der Stäbe sind eine Vielzahl Reaktionskammern ausgebildet. Unter- und oberhalb der die Reaktionskammern aufweisenden Stäbe ist jeweils ein Stab mit einer einzigen Durchgangsbohrung vorgesehen, mit welchen jeweils eine bestimmte Reaktionskammer auf einer Seite mit einem ein Reagenz enthaltenden Gefäß und auf der anderen Seite mit einer Saugpumpe zum Ansaugen der Reagenz in die Reaktionskammer verbunden werden kann. Hierdurch ist es möglich, aus einer großen Anzahl von Reagenzien ein bestimmtes auszuwählen und in die Reaktionskammer zu saugen. Es ist insbesondere möglich, eine Vielzahl solcher Saugvorgänge mit kurzen zeitlichen Abständen auszuführen, wobei jeweils eine andere Reagenz und eine andere Reaktionskammer ausgewählt werden können. Hierdurch können in schneller Abfolge beliebige Kombinationen von Reagenzien in den Reaktionskammern kombiniert und zur chemischen Reaktion gebracht werden.

Ein weiterer Vorteil dieser bekannten Vorrichtung liegt darin, daß die zur Chemikaliensteuerung notwendigen Totvolumen und die Reaktionskammern klein gehalten werden können, so daß der Verbrauch an Reagenzien, die insbesondere bei der Oligonukleotid-Synthese sehr teuer sind, gering ist. Bei weiteren bekannten Vorrichtungen (z.B. DE 35 25 678 A1) werden Ventile zur Steuerung des Chemikalienflusses verwendet, die große Totvolumen besitzen, wodurch die Chemikalienausbeute gering ist.

Bei der aus der EP 0 629 144 B1 bekannten Vorrichtung werden die Stäbe mit einem hohen Druck aneinandergepreßt, damit sie im Bereich ihrer Kontaktflächen dicht sind und keine Reagenzien zwischen die Stäbe kriechen. Der hohe Druck verursacht beim gegenseitigen Verschieben der Stäbe jedoch einen erheblichen Verschleiß. Es ist zudem schwierig, derart langgestreckte Stäbe mit der notwendigen Präzision und Festigkeit herzustellen. Beim Härten solcher Stäbe besteht immer die Gefahr, daß sie sich verziehen. Die maximale Anzahl der Reaktionskammern ist durch die maximale, mit technisch und wirtschaftlich vertretbarem Aufwand, herstellbare Länge der Stäbe begrenzt.

Die WO 98/57181 beschreibt eine Vorrichtung mit mehreren in einem Karussell angeordneten Reaktionsgefäßen. Das Karussell wird mittels eines Schrittmotors über einen Riemen angetrieben, so dass es um eine mittige, vertikale Achse gedreht werden kann. Die einzelnen Reaktionsgefäße sind konzentrisch zu dieser Achse angeordnet. An der Oberseite des Karussells befindet sich eine Injektionsplatte und an der Unterseite eine Evakuierungsplatte. Diese beiden Platten sind ortsfest und mit Durchgängen derart versehen, dass eine Flüssigkeit von der Injektionsplatte durch ein Reaktionsgefäß und durch eine Öffnung in der Evakuierungsplatte befördert werden kann. Es ist ein Klemmmechanismus derart vorgesehen, dass die Stellung der Platten in geeigneter Weise gesteuert werden kann.

Der Erfindung liegt die Aufgabe zugrunde, eine Vorrichtung zur Durchführung von chemischen Reaktionen der eingangs genannten Art derart weiterzubilden, so daß sie trotz einer einfachen und kompakten Ausbildung mit einer großen Anzahl von Reaktionskammern einen hohen Durchsatz gewährleistet.

Die Aufgabe wird durch eine Vorrichtung mit den Merkmalen des Anspruchs 1 gelöst. Vorteilhafte Ausgestaltungen sind in den Unteransprüchen angegeben.

Die erfindungsgemäße Vorrichtung zum Durchführen von chemischen Reaktionen, umfaßt

- einen Reaktionsslider, in dem eine Vielzahl als Reaktionskammern dienende Durchgangsöffnungen ausgebildet sind,
- einen Wahlslider, der an einer Seite des Reaktionssliders, an der die Reaktionskammern münden, angeordnet ist und der eine durchgehende Steueröffnung aufweist, wobei der Wahlslider bezüglich des Reaktionssliders verlagerbar ist,
- einen Chemikalien-Slider, der an der dem Wahislider gegenüberliegenden Seite des Reaktionssliders angeordnet ist, wobei an der zum Wahlslider weisenden Oberfläche des Chemikalien-Sliders Zuführ-Öffnungen zum Zuführen von Chemikalien münden und die Reaktionskammem des Reaktionssliders und die Zuführ-Öffnungen des Chemikalien-Sliders entlang einer Kreisbahn angeordnet sind und der Reaktionsslider und der Wahlslider durch Drehen um eine gemeinsame Drehachse, die durch den Mittelpunkt der Kreisbahn geht, derart verlagerbar sind, daß eine der Zuführ-Öffnungen, eine der Reaktionskammern und die Steueröffnung in fluchtende Anordnung bringbar sind, so daß eine durchgehende Verbindung zur Versorgung der Reaktionskammer mit einer vorbestimmten Reagenz eingestellt werden kann, und eine Einrichtung zum Beaufschlagen der Slider mit einer Kraft vorgesehen ist, um die Kontaktflächen der Slider abzudichten, wobei diese Einrichtung derart ausgebildet ist, daß die Kraft im Bereich der Drehachse angreift.

Diese kreisförmige Anordnung der Reaktionskammern am Reaktionsslider erlaubt eine sehr kompakte Ausbildung des Reaktionssliders mit einer Vielzahl von Reaktionskammern.

Diese kreisförmige Anordnung der Reaktionskammern erzeugt in Kombination mit der zentral angreifenden Beaufschlagungseinrichtung zum Zusammendrücken der Slider eine um die Drehachse symmetrische Druckverteilung, so daß selbst bei einer Vielzahl von Reaktionskammern der Druck gleichmäßig auf die Bereiche der einzelnen Reaktionskammern verteilt wird. Hierdurch ist sichergestellt, daß trotz einer Vielzahl von Reaktionskammern diese sicher abgedichtet werden. Mit der Erfindung können viele Reaktionskammern vorgesehen werden, wodurch ein hoher Durchsatz erzielt wird, und gleichzeitig kann die Abdichtung der vielen Reaktionskammern sichergestellt werden.

Mit dieser Beaufschlagungseinrichtung können die Slider in einer bestimmten Stellung mit einer vorbestimmten Kraft von z.B. 100 N aneinander gepreßt werden, wobei die Kraft zum Drehen der Slider vermindert oder gelöst wird, so daß der Verschleiß gering gehalten wird und über einen langen Zeitraum die Dichtheit an den Kontaktflächen der Slider gewährleistet ist.

Durch die kreisförmige Anordnung der Reaktionsslider können die Slider plattenförmig und insbesondere in der Form einer Ringscheibe gefertigt werden, wodurch der Fertigungsaufwand im Vergleich zu den aus der EP 0 629 144 B1 bekannten Stäben erheblich vermindert wird. Dies beruht unter anderem darauf, daß Platten wesentlich einfacher mit planen Flächen als Stäbe ausgebildet werden können, welche sich zudem beim Härten oftmals verziehen. Diese kreisförmige Anordnung der Reaktionskammern erlaubt somit ein einfacheres Herstellen planer und damit flüssigkeitsdichter Kontaktflächen.

Nach einer weiteren bevorzugten Ausführungsform ist eine Antriebseinheit mit einem zylinderförmigen feststehenden Antriebsgehäuse und zwei konzentrisch und ineinander angeordneten Hohlwellen vorgesehen, auf welche drehfest der Reaktionsslider bzw. der Wahlslider aufgesetzt werden können. Diese von den Slidern getrennte Ausbildung der Antriebseinheit erlaubt ein einfaches und schnelles Austauschen der Slider, die vorzugsweise mittels einer Steckverbindung drehfest mit der Antriebseinheit verbunden werden können. Hierdurch ist es möglich, z.B. die Anzahl der Reaktionskammern durch Austauschen des Reaktionssliders zu verändern und auf die jeweiligen Anforderungen anzupassen.

Nach Anspruch 8 wird eine Weiterbildung dieser Vorrichtung vorgesehen, bei der einige der Zuführ-Öffnungen jeweils mit einer Chemikalien-Zuführleitung in Verbindung stehen, und die Chemikalien-Zuführleitungen jeweils mit einer Ventilanordnung verbunden sind, über die zumindest zwei unterschiedliche Chemikalien zuführbar sind.

Durch diese Ausgestaltung können über einige der Zuführ-Öffnungen die Reagenzien bereits vorgemischt zugeführt werden. Dies kann z.B. sehr vorteilhaft zum Zuführen von mit einem Aktivator vorgemischten Basenreagenzien verwendet werden. Hierdurch wird die Durchmischung der Basenreagenz mit dem Aktivator erheblich verbessert, wodurch innerhalb einer kürzeren Zeit ein besseres Reaktionsergebnis erhalten wird, als es im Stand der Technik bekannt war. Dies führt zu einer weiteren Steigerung des an sich durch die Vielzahl von Reaktionskammern erzielten hohen Durchsatz.

Die Erfindung wird nachfolgend anhand der Zeichnungen beispielhaft näher erläutert. Die Zeichnungen zeigen schematisch:

Fig. 1    mehrere Slider der erfindungsgemäßen Vorrichtung in einer teilweise aufgebrochenen, schematisch vereinfachten perspektivischen Explosionsdarstellung,

Fig. 2    eine Ausführungsform eines Chemikalien-Sliders in perspektivischer Ansicht, und

Fig. 3    eine weitere Ausführungsform eines Chemikalien-Sliders in perspektivischer Ansicht, schematisch vereinfacht, und

Fig. 4    die erfindungsgemäße Vorrichtung zur Durchführung von chemischen Reaktionen in einer Querschnittsdarstellung.

Die erfindungsgemäße Vorrichtung 1 zur Durchführung von chemischen Reaktionen weist als zentrales Element einen Reaktionsslider 2 auf. Der Reaktionsslider 2 ist als Ringscheibe aus einer Stahlplatte mit in der Draufsicht kreisförmiger Form ausgebildet. Am Umfangsbereich des Reaktionssliders sind entlang einer Kreisbahn mit Radius r eine Vielzahl von als Reaktionskammern 3 dienende Durchgangslöcher eingebracht. Im dargestellten Ausführungsbeispiel weist der Reaktionsslider 2 insgesamt 24 Reaktionskammern 3 auf. Die Reaktionskammern weisen einen Reaktionsbereich 4 mit größerem Innendurchmesser und einen unteren Bereich 5 mit kleinerem Innendurchmesser auf. Soll die erfindungsgemäße Vorrichtung für die OligonukleotidSynthese eingesetzt werden, so werden in den Reaktionsbereichen an sich bekannte Fritten zur Aufnahme der Reagenzien eingesetzt.

Die Reaktionskammern 3 können auch zur Aufnahme von Kartuschen ausgebildet sein, die in der Deutschen Gebrauchsmusteranmeldung DE 299 21 606.3 beschrieben sind. Derartige Kartuschen erleichtern die Abdichtung der Reaktionskammern.

Zusätzlich zu den Reaktionskammern 3 sind an der Kreisbahn zwei Durchgangsöffnungen eingebracht, die durchgehend einen schmalen Innendurchmesser aufweisen und als Spülkanäle 6 dienen. Die beiden Spülkanäle 6 sind diametral auf der Kreisbahn angeordnet und unterteilen die Reaktionskammern 3 in zwei Bereiche mit je zwölf Reaktionskammern 3. Der Reaktionsslider 2 ist mit einer zentralen Öffnung 7 versehen. Benachbart zur zentralen Öffnung 7 sind drei mit gleichem Winkelabstand um den Mittelpunkt des Reaktionssliders 2 angeordnete durchgehende Mitnahmeöffnungen 8 eingebracht.

Der Reaktionsslider 2 ist in der erfindungsgemäßen Vorrichtung horizontal angeordnet, wobei angrenzend an seiner oberen Seite ein Wahlslider 9 vorgesehen ist. Beim vorliegenden Ausführungsbeispiel ist der Wahlslider 9 aus einer Stahlplatte gefertigt. Der Wahlslider 9 weist eine in der Draufsicht kreisförmige zentrale Öffnung 11 auf. Angrenzend an der zentralen Öffnung 11 sind drei im gleichen Winkelabstand angeordnete Mitnehmeröffnungen 12 in den Wahlslider 9, eingebracht. Der Wahlslider 9 weist einen größeren Durchmesser als der Reaktionsslider 2 auf. An dem Wahlslider 9 ist eine vertikal durchgehende Steueröffnung 15 eingebracht. Die Steueröffnung 15 des Wahlsliders 9 ist mit dem Radius r der Kreisbahn, auf welcher die Reaktionskammern 3 des Reaktionssliders 2 angeordnet sind, vom Mittelpunkt des Wahlsliders 9 beabstandet, so daß die Steueröffnung 15 bei einer Umdrehung des Wahlsliders 9 die gleiche Kreisbahn wie die Reaktionskammern 3 beschreibt.

Hierdurch kann durch Drehen des Wahlsliders 9 bezüglich des Reaktionssliders 2 um die gemeinsame vertikale, mittige Achse 16 die Steueröffnung 15 mit jeweils einer der Reaktionskammern 3 oder einem der Spülkanäle 6 in fluchtende Übereinstimmung gebracht werden, so daß jeweils ein sich durch den Wahlslider 9 und den Reaktionsslider 2 hindurch erstreckender Kanal ergibt.

Der Wahlslider 9 und der Reaktionsslider 2 sind auf einem Chemikalien-Slider 17 angeordnet. Der Chemikalien-Slider 17 ist ein Stahlring mit etwa rechteckigem, bspw. quadratischem Querschnitt. Der Chemikalien-Slider 17 ist konzentrisch zur gemeinsamen vertikalen Achse 16 angeordnet und weist eine Vielzahl von Durchgangsöffnungen 18 auf, die entlang einer Kreisbahn mit dem Radius r um die gemeinsame Achse 16 angeordnet sind. Die Durchgangsöffnungen 18 sind auf der Kreisbahn vorzugsweise mit gleichem Abstand voneinander angeordnet, wobei sich der Abstand zwischen zwei benachbarten Durchgangsöffnungen 18 vorzugsweise von dem Abstand zwischen zwei benachbarten Reaktionskammern 3 des Reaktionssliders 2 unterscheidet, so daß jeweils nur eine einzige Durchgangsöffnung 18 mit einer einzigen Reaktionskammer 3 in kommunizierender Verbindung stehen kann.

Bei einer alternativen Ausführungsform entsprechen die Winkelabstände zwischen zwei benachbarten Durchgangsöffnungen 18 den Winkelabständen zwischen zwei benachbarten Reaktionskammern 3. Bei dieser Ausführungsform wird in den Pausen zwischen zwei Chemikalienfördervorgängen der Reaktionsslider 2 gegenüber dem Chemikalien-Slider 17 um einen Zwischenschritt versetzt, der z.B. einem halben Winkelabstand zwischen zwei benachbarten Reaktionskammern 3 entspricht, so daß keine der Reaktionskammern 3 mit keiner der Durchgangsöffnungen 18 fluchtet oder die Reaktionskammern 3 sich nicht mit den Durchgangsöffnungen 18 überlappen. Hierdurch wird ein Chemikalienfluß in die Reaktionskammern 3 sicher unterbunden.

Die Durchgangsöffnungen 18 des Chemikalien-Sliders 17 sind zu dessen äußerer Mantelfläche 53 umgelenkt, an der sie in Form von Anschlußöffnungen 21 münden. An den Anschlußöffnungen 21 sind Chemikalien-Zuführleitungen 19 z.B. in Form von Schläuchen angeschlossen, die jeweils zu einer Ventilanordnung 54 führen, über die zumindest zwei unterschiedliche Chemikalien der Chemikalien-Zuführleitung zuführbar sind.

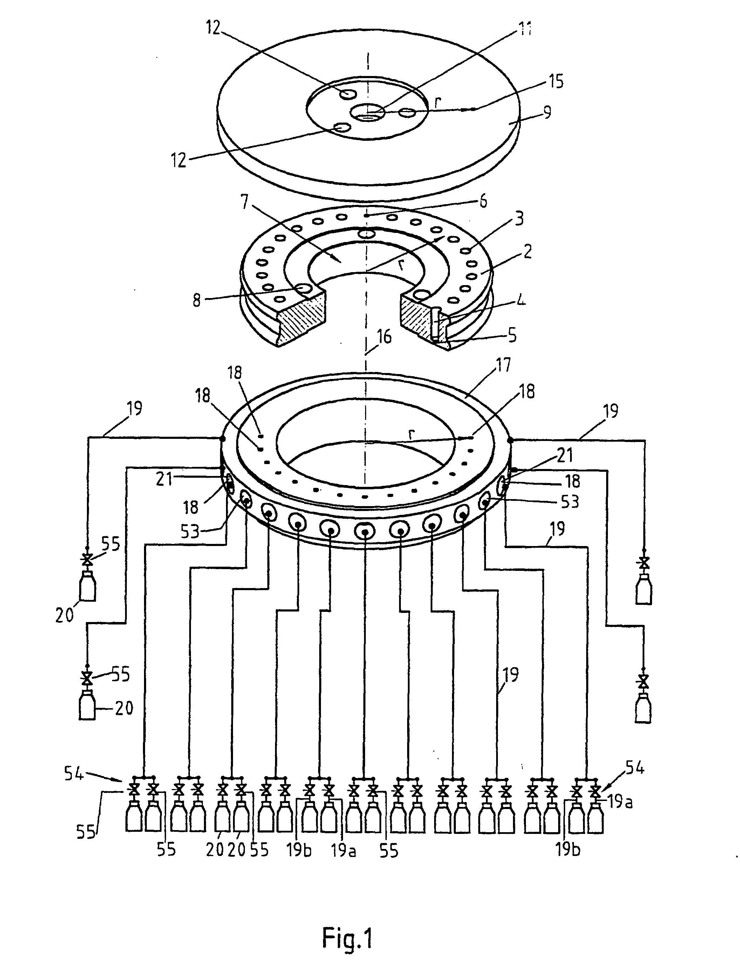

Bei dem in Fig. 1 dargestellten Ausführungsbeispiel verzweigen einige der Chemikalien-Zuführleitungen 19 in zwei Zweigleitungen 19a, 19b, in welchen jeweils ein Schaltventil 55 angeordnet ist und die jeweils zu einem Chemikaliengefäß 20 führen, in dem sich eine vorbestimmte Reagenz befindet. Die mit einer sich verzweigenden Chemikalien-Zuführleitung 19 verbundenen Durchgangsöffnungen 18 des Chemikalien-Sliders 17 können somit mit einer vorbestimmten Reagenz oder mit einer vorbestimmten Mischung aus zwei Reagenzien beschickt werden. Die Durchgangsöffnungen 18 fungieren somit als Chemikalien-Zuführöffungen zum Zuführen von Chemikalien zu den Reaktionskammem 3 des Reaktionssliders 2.

Die unverzweigten Chemikalien-Zuführleitungen 19 führen zu jeweils einem einzigen Chemikaliengefäß 20. In diesen Chemikalien-Zuführleitungen sind zweckmäßigerweise weitere Schaltventile 55 angeordnet, die einen unbeabsichtigten Chemikalienstrom aus einem der Chemikaliengefäße 20 zu einer Reaktionskammer 3 unterbinden können.

Der Chemikalien-Slider 17 ist in der erfindungsgemäßen Vorrichtung feststehend angeordnet und zum Drehen des Wahlsliders 9 und zum Drehen des Reaktionssliders 2 ist jeweils eine Antriebseinrichtung (in Fig. 1 nicht dargestellt) vorgesehen, so daß der Wahlslider 9 unabhängig vom Reaktionsslider 2 um die gemeinsame Achse 16 zumindest eine volle Umdrehung (360°) gedreht werden kann. Die Steueröffnung 15 des Wahlsliders 9 steht über eine weitere Leitung (nicht dargestellt) mit einer Dosierpumpe (nicht dargestellt) in Verbindung.

Nachfolgend wird die grundsätzliche Funktionsweise der in Fig. 1 gezeigten Slider-Anordnung zur Durchführung von chemischen Reaktionen näher erläutert.

In den einzelnen Chemikaliengefäßen 20 befinden sich unterschiedliche Reagenzien, so daß über die Ventilanordnungen 54 den entsprechenden Durchgangsöffnung 18 des Chemikalien-Sliders 17 zwei Reagenzien zugeführt werden können. Durch Anordnen einer der Reaktionskammern 3 über einer bestimmten Durchgangsöffnung 18 des Chemikalien-Sliders 17 und durch gleichzeitiges Anordnen der Steueröffnung 15 des Wahlsliders 9 über dieser Reaktionskammer 3 können von der vorbestimmten Durchgangsöffnung 18 eine oder mehrere Reagenzien der Reaktionskammer 3 zugeführt werden, indem diese mittels einer Dosierpumpe (nicht dargestellt) angesaugt werden. Bei den im vorliegenden Ausführungsbeispiel aus zwei Ventilen 55 bestehenden Ventilanordnungen kann entweder ein einziges Ventil geöffnet sein, so daß lediglich eine einzige Reagenz zugeführt wird, oder es können beide Ventile gleichzeitig oder in einer schnellen Folge abwechselnd geöffnet sein, so daß ein Gemisch aus zwei Reagenzien zugeführt wird.

Soll eine Oligonukleotidsynthese durchgeführt werden, so ist es zweckmäßig die die Basenbausteine enthaltenden Reagenzien (Phosphorigsaureesteramide) gemischt mit einem Aktivator (z.B. Tetracol in Acetonitril) zuzuführen, da durch das Vormischen der beiden Reagenzien unmittelbar vor dem Zuführen zu einer Reaktionskammer in kürzerer Zeit eine wesentlich bessere Reaktionsausbeute erzielt wird, als wenn die beiden Reagenzien nicht intermittierend aufeinanderfolgend zugeführt werden.

Befindet sich die gewünschte Menge einer Reagenz oder einer Mischung aus Reagenzien in der Reaktionskammer 3, so wird der Reaktionsslider 2 und/oder der Wahlslider 9 gedreht, wodurch die von einem Chemikalien-Gefäß 20 bis zur Dosierpumpe durchgehende Verbindung unterbrochen ist, so daß kein weiterer Chemikalienfluß möglich ist. Diese Reaktionskammer 3 kann von der Durchgangsöffnung 18 des Chemikalien-Sliders 17 durch eine kurze Drehbewegung entfernt werden, so daß die Reaktionskammer 3 auch an ihrem unteren Ende verschlossen ist. Dieser Chemikalienfluß kann auch durch Schließen der entsprechenden Ventile 55 unterbunden werden.

Der Vorgang des Ansaugens einer bestimmten Reagenz bzw. eines bestimmten Reagenziengemisches in eine bestimmte Reaktionskammer 3 kann beliebig wiederholt werden und es können dabei die Reagenzien und/oder die Reaktionskammern 3 in einer beliebigen Reihenfolge ausgetauscht werden, so daß jeder Reaktionskammer zu einem vorbestimmten Zeitpunkt eine bestimmte Menge einer vorbestimmten Reagenz zugeführt werden kann. Da die unterschiedlichen Drehpositionen der Slider in wenigen Sekundenbruchteilen eingestellt werden können, können die einzelnen Reaktionskammem 3 quasi gleichzeitig mit gleicher oder unterschiedlicher Abfolge von Reagenzien versorgt werden. In den einzelnen Reaktionskammem 3 lassen sich somit gezielt bestimmte chemische Reaktionen erzeugen.

Vorzugsweise sind die Slider, insbesondere der Reaktionsslider 2 auf eine für die chemischen Reaktionen geeignete Temperatur temperiert.

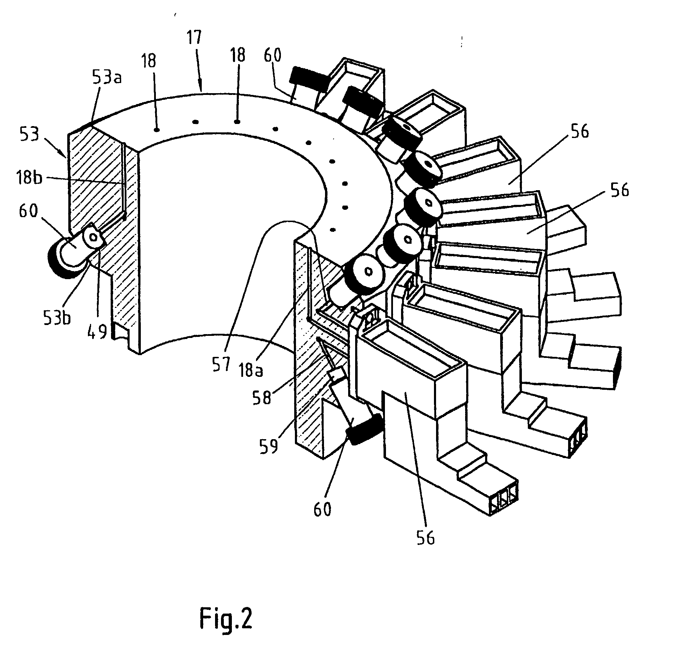

Fig. 2 zeigt schematisch in einer perspektivischen Schnittansicht eine weitere Ausführungsform eines Chemikalien-Sliders 17. Dieser Chemikalien-Slider 17 besteht aus einem ringförmigen Körper mit einer äußeren Mantelfläche 53, die am oberen und unteren Randbereich jeweils zu einer zur Mantelfläche 53 schräg verlaufenden Fläche 53a, 53b abgeschrägt ist.

Es sind zwei Arten von Durchgangsöffnungen 18a, 18b vorgesehen. Die überwiegende Anzahl der Durchgangsöffnungen 18a mündet an der oberen Oberfläche des Chemikalien-Sliders 17 und ist im rechten Winkel zur Mantelfläche 53 abgewinkelt. An dieser Mündungsstelle der Durchgangsöffnung 18a ist ein Mehrwegeventil 56 angeordnet, das jeweils mit einer im Chemikalien-Slider 17 ausgebildeten oberen und einer unteren Zweigleitungen 57, 58 in Verbindung steht. Die beiden Zweigleitungen 57, 58 führen jeweils von der Mantelfläche 53 zu einer an der oberen oder der unteren Abschrägung 53a, 53b ausgebildeten Anschlußausnehmung 59. Diese Anschlußausnehmungen 59 können jeweils einen mit einem Schlauch (nicht dargestellt) verbunden Anschlußkörper 60 aufnehmen. Die Schläuche sind jeweils mit einem Chemikaliengefäß 20 verbunden und stellen einen Teil der Zweigleitungen 57, 58 dar. Die Mehrwegeventile 56 sind im vorliegenden Ausführungsbeispiel als 2-Wegeventile ausgebildet, die jeweils eine der Durchgangsöffnungen 18 entweder mit der oberen oder der unteren Zweigleitung 57, 58 verbinden. Diese 2-Wegeventile 56 besitzen nur zwei Zustände, wobei in einem Zustand die obere und im anderen Zustand die untere Zweigleitung mit der Durchgangsöffnung 18 verbunden ist. Derartige Ventile besitzen nur ein äußerst kleines Totvolumen, so daß die hierdurch erzeugten Verluste an Chemikalien sehr gering sind.

Die zweite Art der Durchgangsöffnungen 18b führen jeweils von der oberen Oberfläche des Chemikalien-Sliders 17 zu einer einzigen, an der unteren Abschrägung 53b angeordneten Anschlußausnehmung 59, in der ein Anschlußkörper 60 aufgenommen werden kann, der mit einem zu einem Chemikaliengefäß führenden Schlauch (nicht dargestellt) in Verbindung steht.

Bei der Synthese von Oligonukleotiden werden folgende Reaktionsvorgänge aufeinanderfolgend zum Anlagern jeweils einer Base durchgeführt. Zunächst wird von einem bestehendem Oligonukleotid oder einer Startreagenz die 5'-Schutzgruppe abgespaltet. Hierzu wird der Reaktionskammer eine Abspaltreagenz (z.B. Trichloressigsäure) zugeführt.

Nach dem Abspaltvorgang wird eine Base angelagert, indem der Reaktionskammer die Basenreagenz (Phosphorigsäureesteramide) zusammen mit einem Aktivator (Tetracol in Acetonitril) zugeführt wird.

Nach dem Abspaltvorgang wird ein Cappingvorgang durchgeführt, bei dem mittels zweier Capping-Reagenzien (Cap-A: Essigsäureanhydrid in Tetrahydrofuran gelöst, Cap-B: n-Methyl-Timidazol in Tetrahydrofuran gelöst und eine Spur Pyridin oder Colidin) die aktivierten, aber nicht mit einer Base versehenen 5'-Enden für eine weitere Anlagerung von Basen blockiert werden. Hierdurch wird das Entstehen von Oligonukleotiden mit unerwünschten Basenkombinationen verhindert.

Danach wird durch das Zuführen von in Acetonitril gelöstem Jod 3-wertiger Phosphor in 5-wertigen Phosphor oxidiert.

Diese Reaktionsvorgänge werden zum Anlagern jeweils einer Base wiederholt. Zwischen den einzelnen Reaktionsvorgängen wird jeweils eine Waschreagenz (z.B. Acetonitril) durch die Reaktionskammer geleitet, um überschüssige Reagenzien zu entfernen.

Die Basen umfassen in der Regel Adenin (A), Cytosin (C), Guanin (G), Thymin (T) und/oder Uracil (U). Es können auch andere Basen vorgesehen werden, die z.B. zu Markierungszwecken verwendet werden.

Sowohl beim Anlagerungsvorgang als auch beim Cappingvorgang werden der Reaktionskammer eine Mischung aus zwei Reagenzien zugeführt, die als Mischung nicht bevorratet werden können. Mit der erfindungsgemäßen Vorrichtung werden diese Mischungen am Chemikalien-Slider 17 gemischt. Das Mischen erfolgt durch schnelles abwechselndes Verbinden der Zweigleitungen 57, 58 mit der Durchgangsöffnung 18, wodurch die beiden Reagenzien intermittierend der Reaktionskammer zugeführt und gemischt werden. Nach dem Zuführen einer solchen Mischung ist es zweckmäßig, den von der Ventilanordnug zur Reaktionskammer führenden Leitungsabschnitt und die Reaktionskammer selbst zu spülen. Hierzu wird die jeweils kostengünstigere der beiden Mischungsreagenzien als Spülung verwendet.

Die Reagenzien (Abspaltungsreagenz, Oxidationsreagenz, Waschreagenz), die den Reaktionsvorgängen ungemischt zugeführt werden, werden von dem jeweiligen Chemikaliengefäß über eine unverzweigte Chemikalien-Zuführleitung und eine der Durchgangsöffnungen 18b der Reaktionskammer zugeführt, ohne daß hierbei eine Ventilanordnung mit einem Mehrwegeventil zwischengeschaltet ist.

Bei dieser Ausführungsform ist es zweckmäßig, sowohl in den verzweigten als auch in den unverzweigten Chemikalien-Zuführleitungen ein Schaltventil (nicht dargestellt) vorzusehen, damit ein unerwünschter Chemikalienstrom unterbunden werden kann.

Der erfindungsgemäße Chemikalien-Slider 17 weist zumindest fünf mit einer Ventilanordnung verbundene Durchgangsöffnungen 18a (für vier Basen und dem jeweiligen Aktivator und den beiden Cappingreagenzien) und zumindest drei unverzweigte Durchgangsöffnungen 18b (für die Abspaltreagenz, Waschreagenz, Oxidationsreagenz) auf.

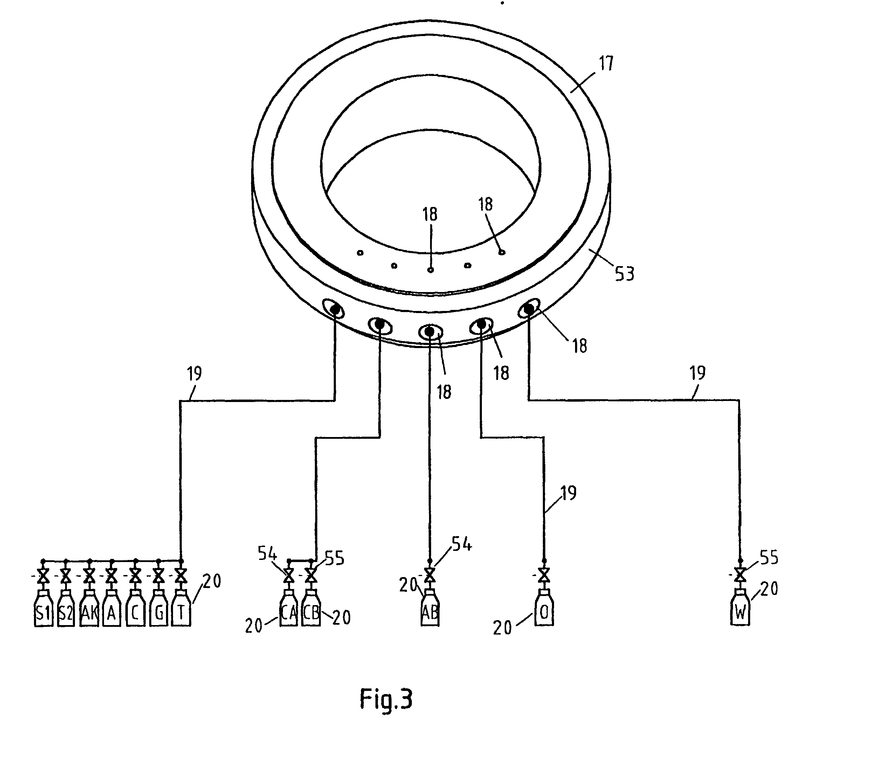

In Fig. 3 ist schematisch vereinfacht eine weitere Ausführungsform eines Chemikalien-Sliders 17 dargestellt. Dieser Chemikalien-Slider besitzt lediglich fünf Durchgangsöffnungen 18, die jeweils über eine Chemikalien-Zuführleitung 19 mit einer Ventilanordnung verbunden sind. Eine der fünf Ventilanordnungen ist eine 7-fach-Ventilanordnung 54 mit sieben Ventilen 55, die jeweils die Chemikalienzuführung aus einem Chemikaliengefäß 20 steuern. Eine weitere Ventilanordnung 54 ist eine 2-fach-Ventilanordnung 54 mit zwei Ventilen 55, die jeweils die Chemikalienzufuhr aus einem Chemikaliengefäß steuern. Die übrigen drei Ventilanordnungen sind 1-fach-Ventilanordnungen, die jeweils aus einem einzigen Ventil 55 bestehen.

An die 7-fach-Ventilanordnung sind Chemikaliengefäße 20 mit einer ersten Spülung S1 (z.B. Argon), einer zweiten Spülung S2 (z.B. Acetonitril), einem Aktivator AK und den vier Basenreagenzien A,C, G und T angeschlossen. An die 2-fach-Ventilanordnung sind Chemikaliengefäße 20 mit den beiden Cappingreagenzien CA und CB angeschlossen.An die 1-fach-Ventilanordnungen sind Chemikaliengefäße mit einer Abspaltreagenz AB bzw. einer Oxidationsreagenz O oder einer Waschreagenz W angeschlossen. Die Chemikaliengefäße 20 mit den Spülungen S1 und S2 sind an dem von den Durchgangsöffnungen 18 entfernten Enden der Chemikalien-Zuführleitung 19 angeordnet, damit sie die gesamte Chemikalien-Zuführleitung spülen und damit alle Rückstände der übrigen Chemikalien entfernen können.

Bei dieser Ausführungsform ist gegenüber der in Fig. 2 gezeigten Ausführungsform nachteilig, daß der die einzelnen Ventile 55 verbindende Leitungsabschnitt und der zu den Durchgangsöffnungen 18 führende Leitungsabschnitt ein Totvolumen beim Wechsel von einer Reagenz auf eine andere Reagenz bildet, aus welchem unverbrauchte Chemikalien gespült werden müssen, ohne daß sie zur Anwendung gelangen. Dieser Nachteil kann durch kurze Leitungsführungen begrenzt werden und wird für Anwendungen in Kauf genommen, bei welchen gezielte Mischungen an Basenreagenzien den Reaktionskammern zugeführt werden, um in einer Reaktionskammer vorbestimmte Mengen sich z.B. an einer einzigen Stelle unterscheidender Oligonukleotide zu erzeugen. Für derartige sich nur geringfügig an einer oder wenigen Stellen unterscheidenden Oligonukleotidpaaren entsteht ein zunehmend größerer Bedarf.

Ein weiterer Vorteil dieser Ausführungsform ist, daß der Chemikalien-Slider 17 nur wenige Durchgangsöffnungen 18 besitzt. Für diese kann einfach ein Winkelabstand gewählt werden, der sich vom Winkelabstand zweier benachbarter Reaktionskammern 3 derart unterscheidet, daß jeweils nur eine einzige Durchgangsöffnung 18 fluchtend zu einer der Reaktionskammern 3 angeordnet ist und die anderen Durchgangsöffnungen weder zu einer anderen Reaktionskammer fluchten noch sich mit dieser überlappen. Wird der Reaktionsslider ein Stück gedreht, so sind alle kommunizierenden Verbindungen zwischen den Durchgangsöffnungen 18 und den Reaktionskammern 3 unterbrochen und ein unerwünschter Chemikalienfluß wird sicher verhindert.

Falls weitere Basen oder andere Chemikalien zugeführt werden sollen, können weitere Ventilanordnung mit zwei bis sieben oder mehr Ventilen vorgesehen werden.

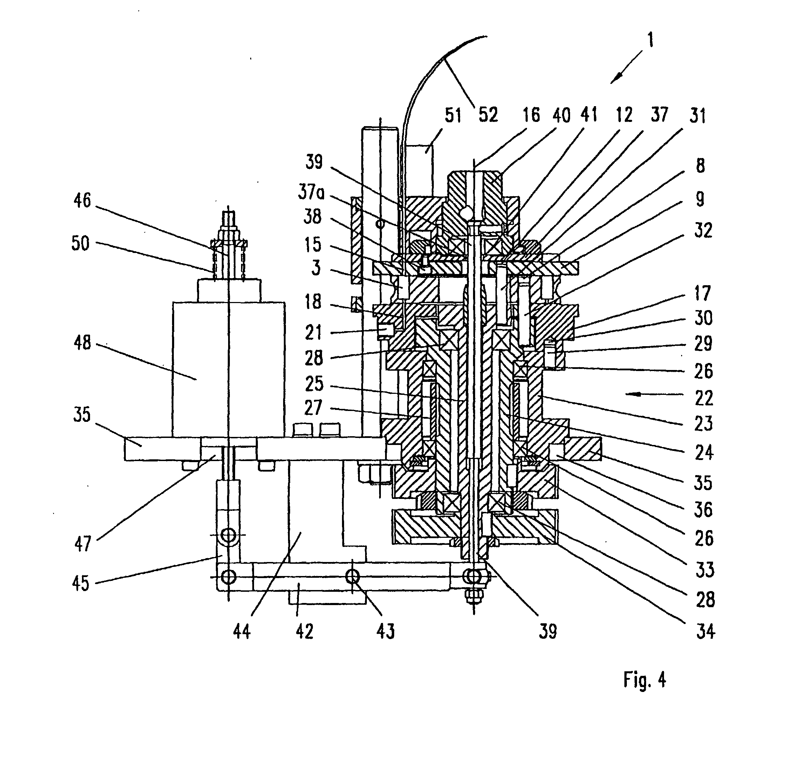

Nachfolgend wird der mechanische Aufbau einer erfindungsgemäße Vorrichtung zur Durchführung chemischer Reaktionen anhand von Fig. 4 näher erläutert.

Diese Vorrichtung 1 weist eine aus einem Reaktionsslider 2, einem Wahlslider 9 und einem Chemikalien-Slider 17 bestehende Einheit auf, die im wesentlichen genauso wie die in Fig. 1 dargestellte Einheit ausgebildet ist.

Diese aus den Slidem 2, 9 und 17 bestehende Einheit ist auf einer Antriebseinheit 22 angeordnet. Die Antriebseinheit 22 weist ein etwa zylinderförmiges feststehendes Antriebsgehäuse 23 und zwei konzentrisch und ineinander angeordnete Hohlwellen 24, 25 auf. Die zum Antriebsgehäuse 23 benachbarte Hohlwelle 24 ist gegenüber dem Antriebsgehäuse 23 mittels zweier Lager 26 drehbar gelagert. Zwischen den beiden Lagern 26 ist eine Abstandsbuchse 27 angeordnet, um die Lager 26 auf einem vorbestimmten Abstand zu halten. Die innerste Hohlwelle 25 ist gegenüber der Hohlwelle 24 wiederum durch zwei weitere Lager 28 drehbar gelagert.

An der oberen Stirnfläche des Antriebsgehäuses 23 sind vertikal nach oben vorstehende Stifte 29 angebracht, die in korrespondierende Sacklöcher 30 des Chemikalien-Sliders 17 eingreifen.

Die obere Stirnfläche der innersten Hohlwelle 25 ist mit vertikal nach oben vorstehenden Mitnehmerstiften 31 versehen, die in die Mitnehmeröffnungen 12 (Fig. 1) des Wahlsliders 9 eingreifen. In entsprechender Weise sind an der zum Antriebsgehäuse 23 benachbarten Hohlwelle 24 an deren oberen Stirnfläche Mitnehmerstifte 32 vorgesehen, die in die Mitnehmeröffnungen 8 des Reaktionssliders 2 eingreifen.

Der Chemikalien-Slider 17, der Wahlslider 9 und der Reaktionsslider 2 sind somit mittels einer lösbaren Steckverbindung drehfest mit dem Antriebsgehäuse 23 bzw. und den beiden Hohlwellen 24, 25 verbunden. Am unteren Ende der beiden Hohlwellen 24, 25 sind an diese radial nach außen vorstehende Zahnkränze 33, 34 vorgesehen, an welchen jeweils über einen Zahnriemen verbunden ein Schrittmotor (nicht dargestellt) angreifen kann. Das Antriebsgehäuse 23 ist an seinem unteren Bereich drehfest mit einer Grundplatte 35 verbunden, wobei die gesamte Antriebseinheit 22 sich durch eine in der Grundplatte 35 ausgebildete Öffnung 36 hindurch erstreckt.

Am Wahlslider 9 liegt eine Druckplatte 37 auf, die mit dem Wahlslider 9 mittels einer Schraubverbindung 38 drehfest verbunden ist. Die Druckplatte 37 ist mit einer zentralen Öffnung 37a versehen, durch die die gemeinsame, vertikale Achse 16 der Slider 2, 9, 17 verläuft. Die innerste Hohlwelle 25 ist zudem konzentrisch zu der Achse 16 angeordnet, so daß von der Druckplatte 37 bis zum unteren Endbereich der Antriebseinheit 22 ein Durchgang ausgebildet ist. In diesem Durchgang ist eine Zugstange 39 angeordnet, die nach oben über die Druckplatte 37 vorsteht und nach unten an der Antriebseinheit 22 ein Stück vorsteht. An ihrem oberen Ende ist die Zugstange 39 mit einem Druckkolben 40 verbunden, der auf der Druckplatte 37 von oben aufliegt, wobei zwischen dem Druckkolben 40 und der Druckplatte 37 ein Lager 41 eingebracht ist, so daß die Druckplatte 37 bzgl. des Druckkolbens 40 gedreht werden kann. Am unteren Ende der Zugstange 39 ist ein Kipphebel 42 angelenkt, der sich etwa parallel zur Grundplatte 35 erstreckt und an seiner Längsmitte an einem Kippgelenk 43 drehbar befestigt ist. Das Kippgelenk 43 ist an einem sich von der Grundplatte 35 nach unten erstreckenden Steg 44 angeordnet.

An dem von der Zugstange 39 entfernten Ende des Kippgelenkes 43 ist mittels eines Zwischenlenkers 45 eine vertikal nach oben stehende Ankerstange 46 gelenkig befestigt. Die Ankerstange 46 verläuft durch eine weitere Öffnung 47 der Grundplatte 35 und durch einen Elektromagneten, der in einem Magnetgehäuse 48 angeordnet ist. Die Ankerstange 46 steht mit ihrem oberen Ende am Magnetgehäuse 48 vor. Im Magnetgehäuse 48 ist ein zylinderrohrförmiger Anker vorgesehen, durch den sich die Ankerstange 46 hindurch erstreckt. Der Anker ist fest mit der Ankerstange 46 verbunden. Eine auf Druck belastete Spiralfeder 50 stützt sich an der Oberseite des Magnetgehäuses 48 ab und ist mit dem oberen Ende der Ankerstange 46 verbunden.

Im stromlosen Zustand des Elektromagneten 48 befindet sich der Anker in einer nach oben geschobenen Stellung, so daß die Ankerstange 46 durch die Wirkung der Spiralfeder 50 nach oben gedrückt wird. Die von der Ankerstange 46 auf den Kipphebel 42 ausgeübte Kraft wird von diesem auf eine nach unten wirkende Zugkraft auf die Zugstange 39 übertragen, welche wiederum den Druckkolben 40 nach unten gegen die Druckplatte 37 drückt. Die Slider 2, 9 und 17 werden somit zwischen dem Antriebsgehäuse 23 und der Druckplatte 37 mit einer vorbestimmten Kraft zusammengedrückt, die z.B. 100 Newton betragen kann.

Wird der Elektromagnet 48 unter Strom geschaltet, so wird der Anker in den Elektromagneten gezogen, wodurch sich die Ankerstange 46 absenkt und die Zugstange 39 anhebt und der Druck auf die Slider 2, 9, 17 vermindert oder auch völlig aufgehoben werden kann.

Bei der erfindungsgemäßen Vorrichtung kann während des Verdrehens des Wahlsliders 9 bzw. des Reaktionssliders 2 der an den Kontaktflächen zwischen den Slidern wirkende Druck somit kurzzeitig vermindert bzw. vollständig aufgehoben werden, wodurch der Verschleiß beim Drehen der Slider wesentlich geringer als bei herkömmlich automatisch arbeitenden Vorrichtungen ist. Zudem wird während des Ansaugens von Reagenzien durch das Anlegen des Druckes die notwendige Dichtheit sichergestellt.

Zur weiteren Vermeidung des Verschleißes der Slider können diese mit einer PFD-Beschichtung oder einer Keramik-Beschichtung versehen sein. Anstelle von Slidern aus Stahl sind auch Slider aus Kunststoff, Keramik- oder Glaswerkstoffen, insbesondere Materialien mit geringem Gleitwiderstand und hoher Chemikalienbeständigkeit, wie z.B. Teflon möglich.

Die Erfindung ist oben anhand eines Ausführungsbeispiels mit 24 Reaktionskammern erläutert worden. Es können auch 48 oder 96 Reaktionskammern vorgesehen sein. Die Anzahl von 24, 48 und 96 Reaktionskammern wird bevorzugt, da die erzeugten Reaktionsprodukte in der Regel in Gefäßen einer Mikrotiterplatte abgelegt werden. Die gebräuchlichen Mikrotiterplatten besitzen 96 Reaktionsgefäße, so daß bei 24, 48 oder 96 Reaktionskammern mit einem, zwei oder vier Synthesevorgängen alle Gefäße einer Mikrotiterplatte mit Syntheseprodukten gefüllt werden können.

Bei einer bevorzugten Ausführungsform der vorliegenden Erfindung ist eine Anzeigeeinrichtung mit jeweils einem Anzeigefeld für jede Reaktionskammer vorgesehen. Auf diesen Anzeigefeldern wird jeweils ein für die Qualität des Synthetisierverfahrens signifikanter Wert angezeigt.

Hierzu ist ein optischer Sensor 51 vorgesehen, der möglichst nahe an den Reaktionskammern 3 bzw. dem oberen Wahlslider 9 angeordnet ist. Im vorliegenden Ausführungsbeispiel ist der optische Sensor 51 unmittelbar an einer oberen Gehäuseabdeckung angeordnet. Es ist jedoch auch möglich, den optischen Sensor in den Wahlslider 9 benachbart zur Steueröffnung 15 zu integrieren. Vom optischen Sensor 51 führt eine Leitung 52 zu der als Saugpumpe ausgebildeten Dosierpumpe (nicht dargestellt). Mit dem optischen Sensor 51 wird die Lichtdurchlässigkeit (Trübheit) des aus den Reaktionskammern 3 zwischen jedem einzelnen Teilarbeitsschritt abgezogenen Zwischenprodukt bzw. Endprodukt detektiert.

Durch das Anordnen des optischen Sensors 51 nahe am Wahlslider 9 wird ein schnelles Ansprechverhalten der Lichtintensitätsmessung erzielt, da die in den Reaktionsgefäßen erzeugten Zwischen- und Endprodukte nur über eine kurze Strecke befördert werden müssen, bis sie vom Sensor 51 detektiert werden können. Darüber hinaus wird bei dieser Anordnung des Sensors 51 Streulicht sicher vom Detektionsbereich abgeschirmt.

Bei einer korrekt ablaufenden Oligonukleotidsynthese trüben sich die Zwischenprodukte durch eine Erhöhung des DMT-Anteils (DMT = Dimethyl) allmählich mit jedem Reaktionsschritt ein. Bei bekannten Oligonukleotidsynthesevorrichtungen wird die bei jedem Teilschritt erhaltene Lichtintensität als Zahlenwert ausgegeben. Hierdurch wird bei mehreren Reaktionskammern eine entsprechende Anzahl von Zahlenkolonnen erzeugt, weshalb sich bereits nach einigen Teilarbeitsschritten eine unübersichtliche Anzahl von Zahlenwerten ergibt.

Bei der erfindungsgemäßen Vorrichtung wird diese große Anzahl von Zahlenwerten vermieden, indem für jede Reaktionskammer lediglich ein für die Qualität der ablaufenden Oligonukleotidsynthese signifikanter Wert dargestellt wird.

Dieser für die Qualität der ablaufenden Oligonukleotidsynthese signifikante Wert ist z.B. der Korrelationskoeffizient R der detektierten Lichtintensitäten.

Der Korrelationskoeffizient R wird gemäß folgender Formel berechnet:

$$R = \frac{m\sigma_i}{\sigma_s},$$

wobei s die bei einer Messung detektierte Lichtintensität ist und die einzelnen Messungen mit dem Zähler i gezählt werden, und $\sigma_s$ die Standardabweichung der Meßwerte s, $\sigma_i$ die Standardabweichung des Zählers i und m die Steigung der Regressionsgeraden in einem Koordinatensystem ist, bei dem die Lichtintensität auf der Ordinate und der Zähler auf der Abszisse aufgetragen ist.

Die Standardabweichung $\sigma_s$, die Standardabweichung $\sigma_i$ und die Steigung m werden nach folgenden Formeln berechnet:

$$\sigma_s = \sqrt{\frac{\sum\limits_N s^2 - \dfrac{\left(\sum\limits_N s\right)^2}{N}}{N-1}}$$

$$\sigma_i = \sqrt{\frac{\sum\limits_N i^2 - \dfrac{\left(\sum\limits_N i\right)^2}{N}}{N-1}}$$

$$m = \frac{\sum\limits_N si - \dfrac{\sum\limits_N s \sum\limits_N i}{N}}{\sum\limits_N i^2 - \dfrac{\left(\sum\limits_N i\right)^2}{N}}$$

wobei N die Gesamtzahl der Meßwerte ist.

In dem oben beschriebenen Koordinatensystem liegen bei einem korrekten Verlauf der Oligonukleotidsynthese die Lichtintensitätswerte durch die allmähliche Eintrübung etwa auf einer leicht abfallenden Geraden. Lediglich bei einem Fehler bei der Oligonukleotidsynthese ergeben sich Lichtintensitätswerte, die von der Geraden deutlich abweichen. Der Korrelationskoeffizient R gibt an, wie exakt die einzelnen Meßwerte auf der Geraden liegen, wobei der Korrelationskoeffizient R Werte zwischen -1 und +1 annehmen kann. Ist der Korrelationskoeffizient gleich 0, so kann keine Gerade durch die Meßwerte gelegt werden, wohingegen bei Werten von -1 oder +1 des Korrelationskoeffizienten R die Meßwerte auf exakt einer Geraden liegen. In den einzelnen Anzeigefeldern werden deshalb die Absolutwerte |R| der jeweils einer Reaktionskammer 3 zugeordneten Korrelationskoeffizienten R dargestellt, so daß ein Bediener bei einer deutlichen Abweichung von 1 sofort erkennt, daß die Synthese in der jeweiligen Reaktionskammer nicht korrekt abläuft, ohne daß er hierzu eine Zahlenkolonne oder eine große Menge an Meßwerten überwachen muß.

Bei einer bevorzugten Ausführungsform der Erfindung werden die jeweils letzten Meßwerte stärker gewichtet als die übrigen Meßwerte. Beispielsweise wird bei der Berechnung des Korrelationskoeffizienten R das Zahlenpaar (Meßwert s;, Zähler i) so stark gewichtet wie alle anderen Meßwerte zusammen, d.h., daß das Zahlenpaar des letzten Meßwertes $S_i$ genauso oft in die Berechnung eingeht, wie andere Meßwerte vorhanden sind, nämlich i-1 mal. Wenn der nächste Meßwert $s_{i+1}$ erhalten wird, wird die erhöhte Wichtung des Meßwertes $s_i$ aufgehoben und der neue Meßwert $s_{i+1}$ wird i mal gewichtet.

Durch diese höhere Wichtung des jeweils letzten Meßwertes spricht der derart modifizierte Korrelationskoeffizient schneller auf eine Abweichung von der Geraden an. Dies erlaubt dem Bediener eine schnelle Erfassung und Reaktion bei Fehlern.

Bei einer bevorzugten Anordnung sind mehrere erfindungsgemäße Vorrichtungen, z.B. 3 bis 20, und vorzugsweise 6 oder 12 zu einer Einheit zusammengefaßt und mit einer gemeinsamen Versorgung für Reagenzien, Gas und elektrische Energie versehen. Die die Reagenzien beinhaltenden Vorratsgefäße weisen jeweils einen Füllstandsmesser auf, so daß deren Füllungsgrad automatisch von einer Füllstandsüberwachungseinrichtung überwacht werden kann. Bei einem geringen Füllungsgrad wird von der Füllstandsüberwachungseinrichtung dem Bediener ein Signal gegeben, daß die entsprechende Reagenz nachgefüllt bzw. das entsprechende Vorratsgefäß ausgetauscht werden muß. Diese Füllstandsüberwachungseinrichtung erlaubt einen teilautomatischen und kontinuierlichen Betrieb dieser aus mehreren Synthesevorrichtungen bestehenden Einheit.

Bei dieser Anordnung werden die Reagenzien mit einem Schutzgas in den Vorratsgefäßen unter Druck gesetzt. Dieses Schutzgas besitzt zwei Funktionen. Es soll einen Kontakt der Reagenzien mit Feuchtigkeit enthaltender Luft verhindern, denn durch den Kontakt mit feuchter Luft könnten unerwünschte Reaktionen eintreten und die Reagenzien in ihrer Funktion beeinträchtigt werden. Zudem wird durch das Schutzgas ein Druck ausgeübt, der die Förderung der Reagenzien zu den Reaktionskammern 3 unterstützt. Hierdurch kann beim Absaugen der Reagenzien aus den Reaktionskammern 3 die Saugpumpe mit einem geringeren Unterdruck arbeiten, wodurch die auch Reagenzien mit niedrigem Dampfdruck verwendet werden können.

Vorzugsweise werden an allen Mündungen der Öffnungen und Bohrungen der Slider, durch welche Chemikalien gefördert werden, ringförmige Dichteinsätze eingesetzt. Diese Dichteinsätze sind aus einem verschleißfestem Kunststoff, wie z.B. Teflon, ausgebildet.

Es ist auch möglich, die Slider aus Kunststoff auszubilden. Geeignete Kunststoffe sind Teflon, Peek und Pom.

Die Erfindung ist oben anhand von Ausführungsbeispielen mit drei Slidern beschrieben. Es sind entsprechende Vorrichtung mit vier oder noch mehr Slider bekannt. Die Erfindung kann auch bei diesen Vorrichtungen angewandt werden. Ein Slider im Sinne der vorliegenden Anmeldung ist jede gleitende Platte, Scheibe oder ein jeder gleitender Stab, wobei die Slider nach der Erfindung als um eine Drehachse drehbare Scheiben ausgebildet sind.

**Patentansprüche**

1. Vorrichtung zum Durchführen von chemischen Reaktionen, mit

   - einem Reaktionsslider (2), in dem eine Vielzahl als Reaktionskammern (3) dienende Durchgangsöffnungen ausgebildet sind,
   - einem Wahlslider (9), der an einer Seite des Reaktionssliders (2), an der die Reaktionskammern (3) münden, angeordnet ist und der eine durchgehende Steueröffnung (15) aufweist, wobei der Wahlslider (9) bezüglich des Reaktionssliders (2) verlagerbar ist,
   - einem Chemikalien-Slider (17), der an der dem Wahlslider (9) gegenüberliegenden Seite des Reaktionssliders (2) angeordnet ist, wobei an der zum Wahlslider weisenden Oberfläche des Chemikalien-Sliders (17) Zuführ-Öffnungen (18) zum Zuführen von Chemikalien münden,

   und die Reaktionskammern (3) des Reaktionssliders (2) und die Zuführ-Öffnungen (18) des Chemikalien-Sliders (17) entlang einer Kreisbahn angeordnet sind und der Reaktionsslider (2) und der Wahlslider (9) durch Drehen um eine gemeinsame Drehachse (16), die durch den Mittelpunkt der Kreisbahn geht, derart verlagerbar sind, daß eine der Zuführ-Öffnungen (18), eine der Reaktionskammern (3) und die Steueröffnung (15) in fluchtende Anordnung bringbar sind, so daß eine durchgehende Verbindung zur Versorgung der Reaktionskammer (3) mit einer vorbestimmten Reagenz eingestellt werden kann, und eine Einrichtung zum Beaufschlagen der Slider (2, 9, 17) mit einer Kraft vorgesehen ist, um die Kontaktflächen der Slider abzudichten, wobei diese Einrichtung an einer Zugstange (39) angreift, die sich durch mittige Öffnungen in den Slidern (2, 9, 17) erstreckt, so dass eine von der Einrichtung zum Beaufschlagen der Slider auf die Zugstange (39) ausgeübte Zugkraft im Bereich der Drehachse (16) angreift.

2. Vorrichtung nach Anspruch 1,
   **dadurch gekennzeichnet,**
   **daß** der Reaktionsslider (2) und der Wahlslider (9) plattenförmig, insbesondere in Form einer Ringscheibe, ausgebildet sind.

3. Vorrichtung nach Anspruch 1 oder 2,
   **dadurch gekennzeichnet,**
   **daß** die Wahlslider (9) und der Reaktionsslider (2) voneinander unabhängig antreibbar sind.

4. Vorrichtung nach einem der Ansprüche 1 bis 3,
   **dadurch gekennzeichnet,**
   **daß** die Einrichtung zum Beaufschlagen der Slider (2, 9, 17) elektrisch ansteuerbar ist.

5. Vorrichtung nach Anspruch 4,
   **dadurch gekennzeichnet,**
   **daß** die Einrichtung zum Beaufschlagen der Slider ein kombinierter Feder/Magnetmechanismus ist, der mit einem Druckkolben (40) gegen eine Druckplatte (37) drückt, wobei zwischen der Druckplatte (37) und einem feststehenden Antriebsgehäuse (23) die Slider (2, 9, 17) angeordnet sind.

6. Vorrichtung nach einem der Ansprüche 1 bis 5,
   **gekennzeichnet durch**,
   eine Antriebseinheit (22) mit einem zylinderförmigen feststehenden Antriebsgehäuse (23) und zwei konzentrisch und ineinander angeordnete Hohlwellen (24, 25), auf welche drehfest der Reaktionsslider (2) bzw. der Wahlslider (9) aufgesetzt werden können.

7. Vorrichtung nach Anspruch 6,
   **dadurch gekennzeichnet,**
   **daß** sich durch die Hohlwellen (24, 25) die Zugstange (39) erstreckt und an dem vom Druckkolben (40) entfernten Ende mit einem Kipphebel (42) gelenkig verbunden ist, der an seinem anderen Ende gelenkig mit der Einrichtung zum Beaufschlagen der Slider (2, 9, 17) verbunden ist.

8. Vorrichtung nach einem der Ansprüche 1 bis 7,
   **dadurch gekennzeichnet,**
   **daß** zumindest eine der Zuführ-Öffnungen (18) mit einer Chemikalien-Zuführleitung (19) in Verbindung steht, die mit einer Ventilanordnung (54) verbunden ist, über die zumindest zwei unterschiedliche Chemikalien der Zuführ-Öffnung (18) zuführbar sind.

9. Vorrichtung nach Anspruch 8,
   **dadurch gekennzeichnet,**
   **daß** die Ventilanordnungen (54) zumindest zwei Ventile (55) aufweisen, die jeweils die Zuführung einer Reagenz steuern.

10. Vorrichtung nach Anspruch 8,
**dadurch gekennzeichnet,**
**daß** die Ventilanordnung (54) ein Mehrwegeventil (56) aufweist, das zwischen der Zuführ-Öffnung (18) abwechselnd und zumindest zwei Zweigleitungen (57, 58) derart geschaltet ist, daß die Zuführ-Öffnung (18) mit einer der beiden Zweigleitungen (57, 58) in kommunizierende Verbindung gebracht werden kann.

11. Vorrichtung nach Anspruch 10,
**dadurch gekennzeichnet,**
**daß** das Mehrwegeventil (56) unmittelbar am Chemikalien-Slider (17) angeordnet ist.

12. Vorrichtung zur Durchführung einer Oligonukleotidsynthese nach einem der Ansprüche 1 bis 11,
**dadurch gekennzeichnet,**
**daß** eine Anzeigeeinrichtung mit jeweils einem Anzeigefeld für jede Reaktionskammer (3) vorgesehen ist, wobei auf den einzelnen Anzeigefeldern jeweils ein für die Qualität der in der jeweiligen Reaktionskammer (3) ablaufenden Reaktion signifikanter Wert angezeigt wird.

13. Vorrichtung nach Anspruch 12,
**dadurch gekennzeichnet,**
**daß** ein optischer Sensor (51) zum Detektieren der Lichtdurchlässigkeit der in den Reaktionskammern erzeugten Zwischen- und Endprodukte vorgesehen ist.

14. Vorrichtung nach Anspruch 13,
**dadurch gekennzeichnet,**
**daß** der optische Sensor (51) unmittelbar angrenzend am Wahlslider (9) angeordnet ist.

15. Vorrichtung nach einem der Ansprüche 12 bis 14,
**dadurch gekennzeichnet,**
**daß** der für die Reaktionen signifikante Wert der Korrelationskoeffizient (R) von Meßwerten einer Lichtdurchlässigkeitsmessung an den Zwischen- und Endprodukten ist.

16. Vorrichtung nach Anspruch 15,
**dadurch gekennzeichnet,**
**daß** der für die Reaktionen signifikante Wert der Absolutwert des Korrelationskoeffizienten (R) von Meßwerten der Lichtdurchlässigkeitsmessung an den Zwischen- und Endprodukten ist.

17. Vorrichtung nach Anspruch 15 oder 16,
**dadurch gekennzeichnet,**
**daß** der jeweils letzte Meßwert bei der Berechnung des Korrelationswertes stärker als die übrigen Meßwerte gewichtet wird.

18. Verfahren zum Ansteuern einer Vorrichtung nach den Ansprüchen 1 bis 17,
**dadurch gekennzeichnet, daß** die Slider in einer bestimmten Stellung aneinander mit einer bestimmten Kraft gedrückt werden, und
die Druckkraft beim Verlagern der Slider vermindert bzw. vollständig aufgehoben wird.

19. Anordnung mit mehreren nach einem der Ansprüche 1 bis 18 ausgebildeten Vorrichtungen,
**dadurch gekennzeichnet,**
**daß** eine gemeinsame Versorgungseinheit für Reagenzien mit mehreren Vorratsgefäßen vorgesehen ist, wobei die Vorratsgefäße mit einem Füllstandsmesser versehen sind, und eine Füllstandsüberwachungseinrichtung den Füllungsgrad der einzelnen Vorratsgefäße automatisch überwacht.

20. Anordnung nach Anspruch 19,
**dadurch gekennzeichnet,**
**daß** die gemeinsame Versorgungseinheit auch zur Versorgung von Gas und elektrischer Energie ausgebildet ist.

**Claims**

1. Apparatus for the conduct of chemical reactions comprising:

   - a reaction slider (2) in which are formed a multiplicity of through holes serving as reaction chambers (3),
   - a selector slider (9) located on a side of the reaction slider (2) at which the reaction chambers (3) emerge, and having a continuous control orifice (15), wherein the selector slider (9) is movable relative to the reaction slider (2),
   - a chemical slider (17), located on the opposite side of the reaction slider (2) to the selector slider (9), wherein feed holes (18) for the supply of chemicals emerge on the surface of the chemical slider (17) facing the selector slider,

   and the reaction chambers (3) of the reaction slider (2) and the feed holes (18) of the chemical slider (17) are arranged along an orbit, and the reaction slider (2) and the selector slider (9) may be so moved by rotation around a common axis of rotation (16) which passes through the centre point of the orbit that one of the feed holes (18), one of the reaction chambers (3) and the control orifice (15) may be brought into alignment, so that a through connection to supply the reaction chamber (3) with a predetermined reagent may be made, and
   a device is provided for applying a force to the sliders (2, 9, 17) in order to seal their contact faces, this device is acting on a connecting rod (39), which extends through central openings in the sliders (2, 9, 17), so that a force, which is applied by the device for applying a force to the sliders, acts in the area of the axis of rotation (16).

2. Apparatus according to claim 1,
**characterized in that**
the reaction slider (2) and the selector slider (9) are plate-shaped, in particular in the form of an annular disc.

3. Apparatus according to claim 1 or 2,
**characterized in that**
the selector slider (9) and the reaction slider (2) are driveable independently of one another.

4. Apparatus according to any of claims 1 to 3,
**characterized in that**
the device for applying pressure to the sliders (2, 9, 17) may be driven electrically.

5. Apparatus according to claim 4,
**characterized in that**
the device for applying pressure to the sliders is a combined spring/magnet mechanism which presses a pressure piston (40) against a pressure plate (37), with the sliders (2, 9, 17) being arranged between the pressure plate (37) and a stationary drive housing (23).

6. Apparatus according to any of claims 1 to 5,
**characterized by**
a drive unit (22) with a stationary cylindrical drive housing (23) and two concentric hollow shafts (24, 25) arranged one inside the other, on which the reaction slider (2) and the selector slider (9) may be non-rotatably fitted.

7. Apparatus according to claim 6,
**characterized in that**
the connecting rod (39) extends through the hollow shafts (24, 25) and is pivotably connected, at the end furthest from the pressure piston (40), to a rocker arm (42) which is pivotably connected at its other end to the device for applying pressure to the sliders (2, 9, 17).

8. Apparatus according to any of claims 1 to 7,
**characterized in that**
at least one of the feed holes (18) is connected to a chemical feed line (19), which is connected to a valve assembly (54), via which at least two different chemicals may be supplied to the feed hole (18).

9. Apparatus according to claim 8,
**characterized in that**
the valve assemblies (54) have at least two valves (55), each controlling the supply of a reagent.

10. Apparatus according to claim 8,
**characterized in that**
the valve assembly (54) has a multiway valve (56) which is switched alternately between the feed hole (18) and at least two branch lines (57, 58) in such a way that the feed hole (18) can be brought into communication with one of the two branch lines (57, 58).

11. Apparatus according to claim 10,
**characterized in that**
the multiway valve (56) is located directly on the chemical slider (17).

12. Apparatus for the conduct of an oligonucleotide synthesis according to any of claims 1 to 11,
**characterized in that**
there is provided a display unit with a window for each reaction chamber (3), wherein a significant value for the quality of the reaction proceeding in a particular reaction chamber (3) is displayed in each of the individual windows.

13. Apparatus according to claim 12,
**characterized in that**
an optical sensor (51) is provided to detect the light transmittance of the intermediate and end products produced in the reaction chambers.

14. Apparatus according to claim 13,
**characterized in that**
the optical sensor (51) is mounted directly adjacent to the selector slider (9).

15. Apparatus according to any of claims 12 to 14,
**characterized in that**
the significant value for the reactions is the correlation coefficient (R) of measured values of a light transmittance measurement of the intermediate and end products.

16. Apparatus according to claim 15,
**characterized in that**
the significant value for the reactions is the absolute value of the correlation coefficient (R) of measured values of light transmittance measurement of the intermediate and end products.

17. Apparatus according to claim 15 or 16,
**characterized in that**
in each case the most recent value in the calculation of the correlation value is weighted more heavily than the other measured values.

18. Method of driving an apparatus according to claims 1 to 17,
**characterized in that**
the sliders are pressed together at a specific point and with a specific force, and
the compressive force is reduced or completely lifted when the sliders are moved.

19. Assembly with several apparatuses according to one of claims 1 to 18,
**characterized in that**
there is provided a common supply unit for reagents, with several storage vessels, wherein the storage vessels are provided with a level indicator, and a level monitoring device automatically monitors the levels of the individual storage vessels.

20. Assembly according to claim 19,
**characterized in that**
the common supply unit is also designed to supply gas and electrical power.

**Revendications**

1. Dispositif pour réaliser des réactions chimiques, avec

   - un glissoir de réaction (2) dans lequel une multitude d'ouvertures de passage servant de chambres de réaction (3) sont formées,
   - un glissoir de sélection (9) est disposé sur un des côtés du glissoir de réaction (2) où débouche les chambres de réaction (3) et lequel glissoir de sélection présente une ouverture de commande (15) continue ; le glissoir de sélection (9) pouvant être déplacé par rapport au glissoir de réaction (2),
   - un glissoir de produits chimiques (17) qui est disposé sur le côté du glissoir de réaction (2) situé en face du glissoir de réaction (2) ; des ouvertures d'alimentation (18) pour conduire des produits chimiques débouchant au niveau de la surface dirigée vers le glissoir de sélection du glissoir de produits chimiques (17),

   et les chambres de réaction (3) du glissoir de réaction (2) ainsi que les ouvertures d'alimentation (18) du glissoir de produits chimiques (17) sont disposées le long d'une piste circulaire et le glissoir de réaction (2) et le glissoir de sélection (9) peuvent être déplacés en tournant autour d'un axe de rotation (16) commun qui s'étend à travers le point central de la piste circulaire, de manière à ce qu'on peut aligner une des ouvertures d'alimentation (18), une des chambres de réaction (3) et l'ouverture de commande *(15),* de sorte qu'une liaison continue puisse être établie pour alimenter la chambre de réaction (3) avec un réactif déterminé, et
   un dispositif pour appliquer aux glissoirs (2, 9, 17) une force est prévu pour rendre étanche les surfaces de contact des glissoirs ; ce dispositif applique une force sur une tige de traction (39) qui s'étend par des ouvertures médianes dans les glissoirs (2, 9, 17) de manière à ce qu'une force de traction exercée par le dispositif pour presser les glissoirs contre la tige de traction (39) est appliquée dans la zone de l'axe de rotation (16).

2. Dispositif selon la revendication 1, **caractérise en ce que**, le glissoir de réaction (2) et le glissoir de sélection (9) ont la forme d'une plaque, notamment sous la forme d'un disque annulaire.

3. Dispositif selon la revendication 1 ou 2, **caractérisé en ce que** le glissoir de sélection (9) et le glissoir de réaction (2) ne peuvent pas être séparés l'un de l'autre de manière indépendante.

4. Dispositif selon une des revendications 1 à 3, **caractérisé en ce que** le dispositif pour appliquer une force aux glissoirs (2, 9, 17) peut être commandé électriquement.

5. Dispositif selon la revendication 4, **caractérisé en ce que** le dispositif pour appliquer une force aux glissoirs est un mécanisme à ressort / à aimant qui presse avec un piston de pression (40) contre une plaque de pression (37) ; les glissoirs (2, 9, 17) étant disposés entre la plaque de pression (37) et un boîtier d'entraînement (23) fixe .

6. Dispositif selon une des revendications 1 à 5, **caractérisé par** une unité d'entraînement (22) avec un boîtier d'entraînement (23) fixe cylindrique et deux arbres creux (24, 25) concentriques disposés de manière concentrique et l'un dans l'autre sur lesquels le glissoir de réaction (2) respectivement le glissoir de sélection (9) sont installés de manière fixe en rotation .

7. Dispositif selon la revendication 6, **caractérisé en ce que** la tige de traction (39) s'étend à travers les arbres creux (24, 25) et est relié de manière articulée à l'extrémité éloignée du piston de pression (40) par un levier de basculement (42) qui est relié à son autre extrémité de manière articulée au dispositif pour être appliqué aux glissoirs (2, 9, 17).

8. Dispositif selon une des revendications 1 à 7, **caractérisé en ce qu'**au moins une des ouvertures d'alimentation (18) est reliée avec une conduite d'alimentation de substances chimiques (19) qui est elle-même reliée à un dispositif de valve (54) grâce auquel au moins deux substances chimiques différentes de l'ouverture d'alimentation (18) peuvent être amenées.

9. Dispositif selon la revendication 8, **caractérisé en ce que** les dispositions de valve (54) comportent au moins deux valves (55) qui commandent chacune l'alimentation un réactif.

10. Dispositif selon la revendication 8, **caractérisé en ce que** la disposition de valve (54) comporte une valve à plusieurs voies (56) qui est commutée alternativement entre l'ouverture d'alimentation (18) de manière à ce que l'ouverture d'alimentation (18) puisse être reliée de façon à communiquer avec une des deux conduites ramifiées (57, 58).

11. Dispositif selon la revendication 10, **caractérisé en ce que** la valve à plusieurs voies (56) est disposée directement sur le glissoir de substances chimiques (17).

12. Dispositif pour réaliser une synthèse d'oligonucléides selon une des revendications 1 à 11, **caractérisé en ce qu'**un dispositif d'affichage est prévu avec à chaque fois un champ d'affichage pour chaque chambre de réaction (3) ; une valeur significative pour la qualité de la réaction se déroulant dans la chambre de réaction (3) étant affichée à chaque dans les différents champs d'affichage.

13. Dispositif selon la revendication 12, **caractérisé en ce qu'**un capteur (51) optique est prévu pour détecter la transparence à la lumière des produits intermédiaires et finaux produits dans les chambres de réaction .

14. Dispositif selon la revendication 13, **caractérisé en ce que** le capteur (51) optique est disposé directement sur le glissoir de sélection (9) contigu.

15. Dispositif selon une des revendications 12 à 14, **caractérisé en ce que** le coefficient de corrélation ( R) des valeurs de mesure d'une mesure de transparence à la lumière sur les produits intermédiaires ou finaux est la valeur significative pour les réactions.

16. Dispositif selon la revendication 15, **caractérisé en ce que** la valeur absolue du coefficient de corrélation ( R) des valeurs de mesure d'une mesure de transparence à la lumière sur les produits intermédiaires ou finaux est la valeur significative pour les réactions.

17. Dispositif selon la revendication 15 ou 16, **caractérisé en ce que** l'on a pondéré plus fortement, à chaque fois, la dernière valeur de mesure que les autres valeurs de mesure pour le calcul de la valeur de corrélation .

18. Procédé pour commander un dispositif selon les revendications 1 à 17, **caractérisé en ce que** les glissoirs sont pressés l'un contre l'autre dans une position précise avec une force déterminée et **en ce**

**que** la force de pression est diminuée ou complètement annulée écartée lorsqu'on déplace le glissoir.

19. Disposition avec plusieurs dispositifs formés selon une des revendication 1 à 18, **caractérisée en ce qu'**une unité d'alimentation commune est prévue pour les réactifs avec plusieurs réservoirs ; lesdits réservoirs étant pourvus d'une jauge de niveau de remplissage et un dispositif de contrôle de niveau de remplissage qui contrôle le niveau de remplissage des différents réservoirs de façon automatique .

20. Disposition selon la revendication 19, **caractérisée en ce que** l'unité d'alimentation commune est formée pour fournir du gaz et de l'énergie électrique.

Fig.1

Fig.2

Fig.3

EP 1 144 106 B1

Fig. 4